# EUROPEAN PATENT APPLICATION

(11) **EP 4 700 765 A1**
(43) Date of publication of application: **25.02.2026**
(21) Application number: 24791725.5
(22) Date of filing: 20.02.2024
(51) Int. Cl.: G10L 15/22

(54) **DEVICE WAKE-UP**

(30) Priority: 19.04.2023 CN 202310445983
(71) Applicant: Hangzhou Ezviz Software Co., Ltd., Zhejiang 310051 (CN)
(72) Inventor: LI, Hangkuai, Hangzhou, Zhejiang 310051 (CN)
(74) Representative: Michalski Hüttermann & Partner Patentanwälte mbB
(86) International application number: PCT/CN2024/077686
(87) International publication number: WO 2024/217137

(57) **Abstract**

A device wake-up method and apparatus, and a speech device and a medium. The method is applied to speech devices (101, 102, 103), and comprises: receiving a speech wake-up instruction, and calculating impact labels of the speech wake-up instruction in respect of the speech devices (101, 102, 103) (S201), wherein the impact labels are used for reflecting the possibilities of the speech wake-up instruction waking up the speech devices (101, 102, 103); and sending the impact labels to a central device, such that on the basis of the impact labels for a plurality of speech devices (101, 102, 103), the central device determines a target speech device that is woken up by the speech wake-up instruction (S202), wherein the central device is a smart device that is in the same network environment as the plurality of speech devices (101, 102, 103).

## Description

### TECHNICAL FIELD

The present application relates to data processing technologies, and in particular, to a method and apparatus for device wake-up, a voice device, and a medium.

### BACKGROUND

With the maturity of artificial intelligence technologies, more and more artificial intelligence technologies have moved from laboratories to the market, and in particular, voice wake-up technology has been applied in a large number of application scenarios.

Users usually use voice wake-up technology to wake up and use related voice devices. However, in a space where multiple voice devices coexist, it often occurs that the woken-up voice device is not the one the user intends to wake up. This also results in the woken-up voice device being unable to effectively provide voice interaction services for the user, thereby leading to a poor voice interaction service experience.

### SUMMARY

Embodiments of the present application provide a method and apparatus for device wake-up, a voice device, and a medium, to solve the problem of poor voice interaction service experience caused by the inaccuracy of the voice device that responds to a voice wake-up command.

According to an aspect of the embodiments of the present application, a method for device wake-up is provided, which is applied to a voice device. The method includes: receiving a voice wake-up command, and calculating an impact label of the voice wake-up command on the voice device, where the impact label is configured to reflect a possibility that the voice wake-up command wakes up the voice device; and sending the impact label to a central device, so that the central device determines, based on impact labels of multiple voice devices, a target voice device to be woken up by the voice wake-up command; where the central device is an pre-determined intelligent device in a same network environment as the multiple voice devices.

Optionally, calculating the impact label of the voice wake-up command on the voice device includes: calculating at least one of an audio quality, a positional relationship, an operational load level or a recognition time of the voice wake-up command at the voice device; and taking at least one of the audio quality, the positional relationship, the operational load level or the recognition time as the impact label of the voice wake-up command on the voice device; where the audio quality is configured to reflect an audio quality of the voice wake-up command received by the voice device; the positional relationship is configured to reflect a distance and a position angle between a user who issues the voice wake-up command and the voice device; the operational load level is configured to reflect an operational load level of the voice device when the voice wake-up command is received; and the recognition time is configured to reflect a time at which the voice device receives the voice wake-up command.

Optionally, calculating the audio quality corresponding to the voice wake-up command includes: calculating a volume value of the voice wake-up command based on an audio frequency and an audio amplitude of the voice wake-up command at the voice device; adjusting the volume value by a preset amplitude based on a device type of the voice device to obtain an updated volume value after adjustment; and determining the audio quality of the voice wake-up command at the voice device based on the updated volume value.

Optionally, calculating the positional relationship of the voice wake-up command at the voice device includes: obtaining a distance value between the user and the voice device based on a position sensing module deployed in the voice device; obtaining receiving times at which multiple audio receiving modules deployed in the voice device receive the voice wake-up command; calculating a time difference between an earliest receiving time and a latest receiving time in the voice device, and calculating a relative positional relationship between the user and the voice device according to a sound speed value and the time difference; and determining an included angle between the user and a central line of the voice device based on the relative positional relationship, and taking the included angle as a position angle.

Optionally, after sending the impact label to the central device, the method further includes: in response to receiving a wake-up notification sent by the central device, performing voice interaction with the user based on the voice wake-up command.

Optionally, before receiving the voice wake-up command, the method further includes: in response to detecting an election event, sending a first message reflecting a performance indicator of the voice device to all intelligent devices in a same network environment as the voice device, so that in a case that a candidate intelligent device receiving the first message detects that a performance indicator of the candidate intelligent device are higher than the performance indicator of the voice device, the candidate intelligent device sends a second message to the voice device, where the second message includes the performance indicator of the candidate intelligent device and is configured to inform the voice device that there exists an intelligent device in the network environment with a higher performance indicator than the voice device; determining the voice device as the central device in a case that no second message sent by any candidate intelligent device is received within a preset time period; and electing a candidate intelligent device with a highest performance indicator as the central device in a case that one or more second messages sent by candidate intelligent devices are received within the preset time period.

According to an aspect of the embodiments of the present application, a method for device wake-up is provided, which is applied to a central device. The method includes: obtaining an impact label of at least one voice device, where the impact label is configured to reflect a possibility that a voice wake-up command wakes up a voice device to which the impact label belongs; determining a target voice device corresponding to the voice wake-up command based on the impact label of the at least one voice device; and sending a wake-up notification to the target voice device.

Optionally, the central device has a voice interaction function, and obtaining the impact label of the at least one voice device includes: receiving the voice wake-up command, and calculating an impact label of the voice wake-up command on the central device; and receiving impact labels sent by other voice devices in a same network environment as the central device.

Optionally, determining the target voice device corresponding to the voice wake-up command based on the impact label of the at least one voice device includes: for each of the at least one voice device, calculating a wake-up index for the voice device based on parameters included in an impact label of the voice device and weight coefficients respectively corresponding to the parameters; and determining a voice device with a largest wake-up index as the target voice device corresponding to the voice wake-up command.

Optionally, determining the voice device with the largest wake-up index as the target voice device corresponding to the voice wake-up command includes: determining whether the voice device with the largest wake-up index is currently in a service processing state based on an operational load level corresponding to the voice device with the largest wake-up index; in a case that the voice device with the largest wake-up index is currently in the service processing state, determining a candidate voice device closest to the voice device with the largest wake-up index as the target voice device, where a device type of the candidate voice device is the same as a device type of the voice device with the largest wake-up index; and in a case that the voice device with the largest wake-up index is not currently in the service processing state, determining the voice device with the largest wake-up index as the target voice device.

Optionally, before obtaining the impact label sent by the at least one voice device, the method further includes: in response to detecting an election event, sending a first message reflecting a performance indicator of the central device to all other intelligent devices in a same network as the central device; determining that no second message sent by any one of the other intelligent devices is received within a preset time period, where the second message sent by any one of the other intelligent devices is configured to inform that a performance indicator of the any one of the other intelligent devices in the network is higher; and sending a feedback message informing that the central device itself is a central device to all voice devices in the network.

Optionally, after sending the feedback message informing that the central device itself is the central device to all voice devices in the network, the method further includes: resending an election command to all intelligent devices in the network in a case that a change in a number of intelligent devices connected in the network is detected.

According to another aspect of the embodiments of the present application, an apparatus for device wake-up is provided, which is applied to a voice device. The apparatus includes: a receiving module, configured to receive a voice wake-up command and calculate an impact label of the voice wake-up command on the voice device, where the impact label is configured to reflect a possibility that the voice wake-up command wakes up the voice device; and a first sending module, configured to send the impact label to a central device, so that the central device determines, based on impact labels of multiple voice devices, a target voice device to be woken up by the voice wake-up command; where the central device is a pre-determined intelligent device in a same network environment as the multiple voice devices.

According to another aspect of the embodiments of the present application, an apparatus for device wake-up is provided, which is applied to a central device. The apparatus includes: an obtaining module, configured to obtain an impact label of at least one voice device, where the impact label is configured to reflect a possibility that a voice wake-up command wakes up a voice device to which the impact label belongs; a determining module, configured to determine a target voice device corresponding to the voice wake-up command based on the impact label of the at least one voice device; and a second sending module, configured to send a wake-up notification to the target voice device.

According to another aspect of the embodiments of the present application, a voice device is provided, including: a memory, configured to store executable instructions; and a display, configured to interact with the memory to execute the executable instructions so as to perform operations of any one of the methods for device wake-up described above.

According to yet another aspect of the embodiments of the present application, a computer-readable storage medium is provided, which is configured to store computer-readable instructions, and when the instructions are executed, operations of any one of the methods for device wake-up described above are performed.

In the present application, a voice wake-up command can be received, and an impact label of the voice wake-up command on a device can be calculated, where the impact label is configured to reflect a possibility that the voice wake-up command wakes up the voice device. The impact label is sent to a central device, so that the central device determines a target voice device to be woken up by the voice wake-up command based on impact labels of multiple voice devices; where the central device is a pre-determined intelligent device in a same network environment as the multiple voice devices.

By applying the technical solution of the present application, when a voice wake-up command issued by a user is received in a scenario where multiple voice devices coexist, the pre-elected central device in the scenario can receive impact labels, each of which is calculated by a voice device based on the voice wake-up command received by itself, and compare the impact labels to find the voice device that is most likely to be the one to be woken up by the current voice wake-up command, so that the woken-up voice device can perform voice interaction with the user. This avoids the problem of poor voice interaction service experience caused by the inaccuracy of the voice device that responds to the wake-up voice command on the one hand. On the other hand, it is also possible to monitor the online operation status of each voice device in real time by checking whether the central device has received the impact labels from all voice devices.

The technical solution of the present application will be described in further detail below with reference to the accompanying drawings and embodiments.

### BRIEF DESCRIPTION OF DRAWINGS

The drawings that form part of the specification illustrate the embodiments of the present application and, together with the description, serve to explain the principles of the present application.

With reference to the drawings, the present application can be understood more clearly from the following detailed description.
FIG. 1 shows a schematic diagram of a system applying a method for device wake-up according to an embodiment of the present application.
FIG. 2 shows a schematic diagram of a method for device wake-up according to an embodiment of the present application.
FIG. 3 shows a schematic flowchart of a method for device wake-up according to an embodiment of the present application.
FIG. 4 shows a schematic diagram of determining a distance between a user and a voice device according to an embodiment of the present application.
FIG. 5 shows a schematic diagram of determining a position angle between a user and a voice device according to an embodiment of the present application.
FIG. 6 shows a schematic diagram of an election process among various devices according to an embodiment of the present application.
FIG. 7 shows a schematic diagram of another method for device wake-up according to an embodiment of the present application.
FIG. 8 shows a schematic flowchart of another method for device wake-up according to an embodiment of the present application.
FIG. 9a and FIG. 9b each show a structural schematic diagram of an electronic device according to an embodiment of the present application.
FIG. 10 shows a structural schematic diagram of a voice device according to an embodiment of the present application.
FIG. 11 shows a schematic diagram of a storage medium according to an embodiment of the present application.

### DETAILED DESCRIPTION

Various exemplary embodiments of the present application will now be described in detail with reference to the accompanying drawings. It should be noted that unless otherwise specified in detail, the relative arrangements of components and steps, numerical expressions, and numerical values set forth in these embodiments do not limit the scope of the present application.

Meanwhile, it should be understood that, for the convenience of description, the sizes of various parts shown in the drawings are not drawn in accordance with the actual proportional relationship.

The following description of at least one exemplary embodiment is merely illustrative in nature and is not intended to limit the present application, its application, or its use in any way.

Technologies, methods, and devices known to those of ordinary skill in the relevant art may not be discussed in detail, but where appropriate, such technologies, methods, and devices should be considered part of the specification.

It should be noted that similar reference numerals and letters denote similar items in the following drawings, and thus, once an item is defined in one drawing, it need not be further discussed in subsequent drawings.

In addition, the technical solutions of the various embodiments of the present application may be combined with each other, but such combination must be based on the realization by those of ordinary skill in the art. When the combination of technical solutions is contradictory or cannot be realized, it should be considered that such a combination of technical solutions does not exist and is not within the scope of protection claimed by the present application.

It should be noted that all directional indications (such as up, down, left, right, front, rear, ...) in the embodiments of the present application are only used to explain the relative positional relationships, movement situations, etc., between components in a specific posture (as shown in the accompanying drawings). If the specific posture changes, the directional indications will also change accordingly.

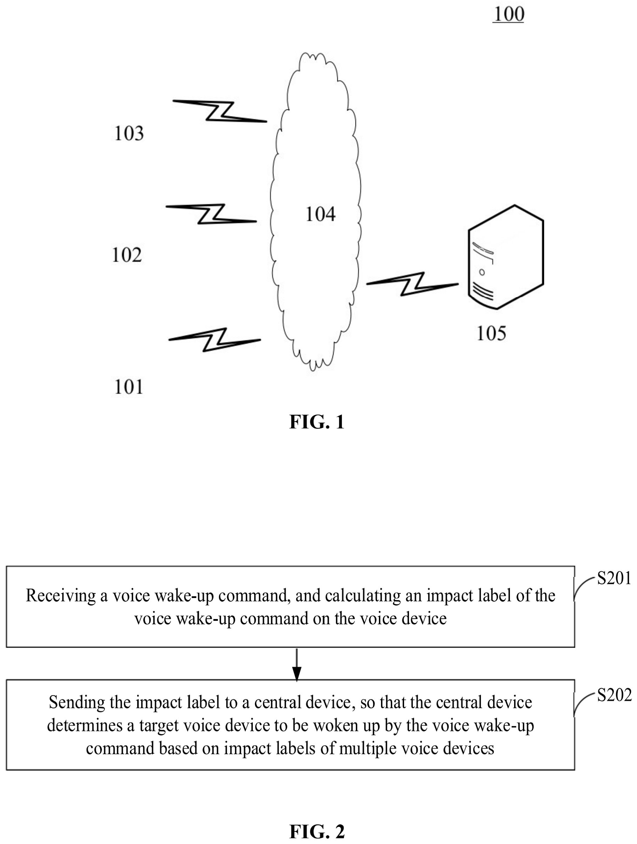

The method for device wake-up according to the exemplary implementations of the present application will be described below with reference to FIGS. 1-8. It should be noted that the following application scenarios are only shown to facilitate understanding of the spirit and principle of the present application, and the implementations of the present application are not limited in this regard. On the contrary, the implementations of the present application can be applied to any applicable scenario.

FIG. 1 shows a schematic diagram of an exemplary system architecture 100 to which the method for device wake-up of the embodiments of the present application can be applied.

In an implementation, the voice devices 101, 102 and 103 in the present application may be intelligent electrical voice devices capable of recognizing user voice commands. As an example, an intelligent speaker is used for illustration in FIG. 1.

As shown in FIG. 1, the system architecture 100 may include one or more of voice devices 101, 102 and 103, a network 104, and a server 105. The network 104 serves as a medium for providing a communication link between the voice devices 101, 102, 103 and the server 105. The network 104 may include various connection types, such as wired, wireless communication links, or optical fiber cables, and the like.

It should be understood that the numbers of the voice devices, the network, and the server in FIG. 1 are merely schematic. Any number of voice devices, networks, and servers may be provided according to implementation needs. For example, the server 105 may be a server cluster composed of multiple servers.

A user can use the voice devices 101, 102, 103 to interact with the server 105 through the network 104 to receive or send messages, execute instructions, and the like.

In an implementation, in the embodiments of the present application, the intelligent electrical voice device 103 (which may also be the voice device 101 or 102) can implement the following operations: receiving a voice wake-up command, calculating an impact label of the voice wake-up command on the voice device 103 (the impact label is configured to reflect a possibility that the voice wake-up command wakes up the voice device 103), and send the impact label to a central device, so that the central device determines a target voice device to be woken up by the voice wake-up command based on impact labels of multiple voice devices. Here, the central device is a pre-determined intelligent device in a same network environment as the multiple voice devices.

It should be noted here that the method for device wake-up provided in the embodiments of the present application may be performed by one or more of the voice devices 101, 102and 103, and/or the server 105. Correspondingly, the apparatus for device wake-up provided in the embodiments of the present application is generally disposed in the corresponding voice device and/or the server 105, but the present application is not limited thereto.

In an implementation, the execution subject of the embodiments of the present application may be an intelligent electrical voice device capable of recognizing user voice commands, such as an intelligent speaker, an intelligent kitchen appliance, an intelligent refrigeration device, an intelligent temperature adjustment device, an intelligent purification device, an intelligent display device, and the like.

Taking household electrical voice devices as an example, with the development of integrated circuit, artificial intelligence, and Internet technologies, traditional household appliances have a new positioning: household appliances not only have traditional functions, but also can become part of the home smart network and provide users with more intelligent services. However, the traditional control methods of household appliances can no longer meet the demand for more convenient human-computer interaction. Therefore, household appliances with voice control have become a future development trend.

At present, due to the high complexity of the working environment of household appliances, there may be multiple intelligent voice devices capable of recognizing user voice commands in the area where they are located. For example, taking a kitchen environment as an example, the kitchen environment may include intelligent range hoods, intelligent steam ovens, intelligent ovens, intelligent fans, intelligent air conditioners, and the like. Alternatively, taking a bedroom as an example, the bedroom environment may include intelligent air conditioners, intelligent speakers, intelligent light assemblies, and the like.

It can be understood that when a user uses voice wake-up technology to wake up and use relevant voice devices in the above-mentioned scenarios where there are multiple intelligent voice devices capable of recognizing user voice commands, it may occur that the woken-up voice device is not the one the user intends to wake up. This will also result in the woken-up voice device being unable to effectively provide voice interaction services for the user, thereby leading to the problem of poor voice interaction service experience.

Further, the present application further proposes a method and apparatus for device wake-up, a voice device, and a medium.

FIG. 2 schematically shows a flowchart of a method for device wake-up according to an embodiment of the present application. As shown in FIG. 2, the method is applied to a voice device and includes steps S201 to S202.

S201: receiving a voice wake-up command, and calculating an impact label of the voice wake-up command on the voice device, where the impact label is configured to reflect a possibility that the voice wake-up command wakes up the voice device.

In an implementation, the execution subject of the embodiment of the present application may be an intelligent electrical voice device capable of recognizing user voice commands, such as an intelligent speaker, an intelligent kitchen appliance, an intelligent refrigeration device, an intelligent temperature adjustment device, an intelligent purification device, an intelligent display device, and the like.

To address the problem that in an environment where multiple voice devices coexist, the woken-up voice device often fails to effectively provide voice interaction services for the user, thereby leading to a poor voice interaction service experience, in the embodiment of the present application, after receiving the voice wake-up command issued by the user, the voice device does not activate the voice interaction function with the user immediately. Instead, the voice device first calculates an impact label that reflects the possibility that the voice wake-up command is used to wake up the voice device, and then sends the impact label to a central device in the same network environment subsequently.

In an implementation, the impact label may include one or more parameters, where each parameter is configured to reflect a command reception status of the voice device when the voice device receives the voice wake-up command.

For example, the impact label may include an audio quality reflecting the audio quality of the received voice wake-up command, a positional relationship reflecting the positional relationship between the voice device and the user who issued the voice wake-up command, an operational load level reflecting the operational load level of the voice device when receiving the voice wake-up command, a time point reflecting the time point at which the voice device receives the voice wake-up command, and the like.

It can be understood that the above-mentioned parameters (i.e., audio quality, positional relationship, operational load level, and recognition time) are all impact labels configured to reflect the possibility of whether the voice wake-up command is intended to wake up the voice device.

Specifically, for a voice device, the better the audio quality of the received voice wake-up command, the higher the possibility that the voice wake-up command issued by the user is intended to wake up the voice device. Similarly, the closer the positional relationship corresponding to the received voice wake-up command, the higher the possibility that the voice wake-up command issued by the user is intended to wake up the voice device.

In an implementation, when receiving the voice wake-up command, the lower the operational load level of the voice device, the higher the possibility that the voice device is the wake-up target corresponding to the voice wake-up command issued by the user.

In another implementation, the operational load level can be configured to indicate whether the voice device is currently in a service processing state. It can be understood that if the voice device is in a service processing state, even if the current wake-up command is directed to this voice device, the central device still needs to determine another voice device as the wake-up target. For example, the central device may determine another voice device adjacent to the voice device in the service processing state as the wake-up target.

Similarly, the more the time point when the voice wake-up command is received coincides with the peak operating period of the voice device, the higher the possibility that the voice wake-up command issued by the user is intended to wake up the voice device.

S202: sending the impact label to a central device, so that the central device determines a target voice device to be woken up by the voice wake-up command based on impact labels of multiple voice devices;
where the central device is a pre-determined intelligent device in a same network environment as the multiple voice devices.

In the embodiment of the present application, it is necessary to first elect a central device from all intelligent devices in the same network environment. This central device will then act as an arbiter to arbitrate the impact labels sent by respective voice devices, so as to determine the wake-up target (i.e., the target voice device) corresponding to the current voice wake-up command.

In an implementation, the central device may be an intelligent device with certain computing capabilities. For example, the central device may be a voice device or a non-voice device. If the central device is a non-voice device, it may be a computer, a laptop, or other intelligent devices with a processing module.

In another implementation, there may be one or more central devices. If there are multiple central devices, the central devices may be all voice devices, or the central devices may be all non-voice devices, or the central devices may include both types.

Further, the central device needs to be selected in advance, that is, the central device needs to be selected based on a preset rule before the voice device receives the voice wake-up command. For example, at least one central device may be elected periodically from all intelligent devices in the same network environment. Alternatively, at least one central device may be elected from all intelligent devices in the same network environment based on an initiation instruction generated by a certain intelligent device or a user.

In an implementation, after the central device determines the target voice device to be woken up by the current voice wake-up command based on the impact labels of voice devices, the central device may send a wake-up notification to the target voice device, informing that the target voice device is the wake-up target this time. If a voice device receives this wake-up notification, the voice device can activate the voice interaction service to interact with the user for relevant data; otherwise, the voice device can ignore the current voice wake-up command.

In an implementation, the voice device may send the impact label to the central device through a remote or short-range communication method. For example, the remote communication method may be a local area network, a mobile network, a wireless network, or the like, and the short-range communication method may be NFC, Bluetooth, or the like.

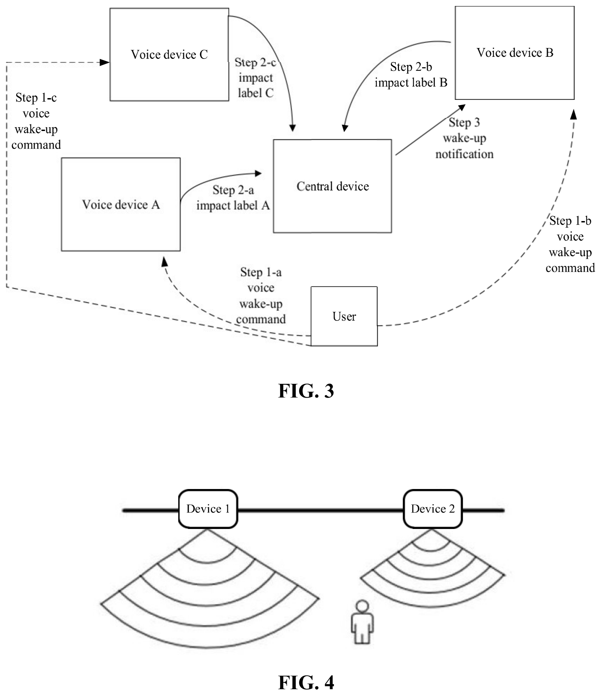

In an implementation, as shown in FIG. 3, the embodiment of the present application exemplarily describes the method for device wake-up, which involves voice device A, voice device B, voice device C, and a central device, where the above-mentioned multiple devices are connected to the same communication network. The method for device wake-up includes the following steps.

Step 1-a: when a user issues a voice wake-up command (e.g., "Please help me"), voice device A receives the voice wake-up command.

At this time, voice device A calculates the audio quality a1 corresponding to the voice wake-up command received by voice device A, and calculates the positional relationship a2 between the user who issued the voice wake-up command and voice device A. Then, voice device A combines the audio quality a1 and the positional relationship a2 to form impact label A.

Step 1-b: for the same voice wake-up command (e.g., "Please help me"), voice device B receives the voice wake-up command.

At this time, voice device B calculates the audio quality b1 corresponding to the voice wake-up command received by voice device B, and calculates the positional relationship b2 between the user who issued the voice wake-up command and voice device B. Then, voice device B combines the audio quality b1 and the positional relationship b2 to form impact label B.

Step 1-c: for the same voice wake-up command (e.g., "Please help me"), voice device C receives the voice wake-up command.

At this time, voice device C calculates the audio quality c1 corresponding to the voice wake-up command received by voice device C, and calculates the positional relationship c2 between the user who issued the voice wake-up command and voice device C. Then, voice device C combines the audio quality c1 and the positional relationship c2 to form impact label C.

It should be noted that the above three steps (Step 1-a, Step 1-b, Step 1-c) may be performed simultaneously or sequentially in any order, and there is no limitation in this regard.

Step 2-a: after generating impact label A, voice device A sends impact label A to the central device through a remote or short-range communication method.

Step 2-b: after generating impact label B, voice device B sends impact label B to the central device through a remote or short-range communication method.

Step 2-c: after generating impact label C, voice device C sends impact label C to the central device through a remote or short-range communication method.

It should be noted that the above three steps (Step 2-a, Step 2-b, Step 2-c) may be performed simultaneously or sequentially in any order, and there is no limitation in this regard.

Step 3: after receiving the three impact labels, the central device selects the voice device corresponding to the audio command with the highest volume (e.g., voice device B) according to the audio quality included in each of the three impact labels; and selects the voice device that is closest to the user and faces the user (e.g., voice device B) according to the positional relationship included in each of the three impact labels.

At this time, the central device determines, by comparing the three impact labels, that the target voice device to be woken up by the current voice wake-up command is voice device B.

Further, the central device may send a wake-up instruction to voice device B, so that voice device B activates the voice interaction service with the user (e.g., voice device B outputs the voice "How can I help you?").

To summarize with reference to FIG. 3, in the present application, a voice device can receive a voice wake-up command, calculate an impact label of the voice wake-up command on the voice device (where the impact label is configured to reflect a possibility that the voice wake-up command wakes up the voice device), and send the impact label to a central device, so that the central device determines a target voice device to be woken up by the voice wake-up command based on impact labels of multiple voice devices. Here, the central device is a pre-determined intelligent device in a same network environment as the multiple voice devices.

By applying the technical solution of the present application, when a voice wake-up command issued by a user is received in a scenario where multiple voice devices coexist, the pre-elected central device in the scenario can receive impact labels, each of which is calculated by a voice device based on the voice wake-up command received by itself, and compare the impact labels to find the target that is most likely to be the one to be woken up by the current voice wake-up command, so that the wake-up target can perform voice interaction with the user. This avoids the problem of poor voice interaction service experience caused by the inaccuracy of the voice device that responds to the wake-up voice command on the one hand. On the other hand, it is also possible to monitor the online operation status of each voice device in real time by checking whether the central device has received the impact labels from all voice devices.

Optionally, in another embodiment based on the above method of the present application, calculating the impact label of the voice wake-up command on the voice device includes: calculating at least one of an audio quality, a positional relationship, an operational load level or a recognition time of the voice wake-up command at the voice device; and taking at least one of the audio quality, the positional relationship, the operational load level or the recognition time as the impact label of the voice wake-up command on the voice device; where the audio quality is configured to reflect an audio quality of the voice wake-up command received by the voice device; the positional relationship is configured to reflect a distance and a position angle between a user who issues the voice wake-up command and the voice device; the operational load level is configured to reflect an operational load level of the voice device when the voice wake-up command is received; and the recognition time is configured to reflect a time at which the voice device receives the voice wake-up command.

In an optional implementation, the process for the voice device to calculate the audio quality (i.e., a volume value) may include the following steps: calculating a volume value of the voice wake-up command based on an audio frequency and an audio amplitude of the voice wake-up command at the voice device; adjusting the volume value by a preset amplitude according to a device type of the voice device to obtain an updated volume value after adjustment; and determining the audio quality of the voice wake-up command based on the updated volume value.

Specifically, when the voice device recognizes a voice wake-up word, the voice device may first copy a segment of audio data from the start to the end of the wake-up word. After performing noise removal processing such as filtering on the audio data, the voice device calculates parameters such as audio frequency and audio amplitude to obtain the volume value of the audio data.

In an implementation, due to differences in the structure, hardware, or audio analysis solutions of voice collection apparatuses among various voice devices, different types of voice devices may have different volume analysis methods for the same segment of audio data. To unify the standard, in the embodiment of the present application, the calculated volume value may be adjusted by a preset amplitude (e.g., a certain value of volume increase compensation or a certain value of volume decrease compensation) based on the device type of the voice device, so that the energy values finally output by devices of different models meet the same comparison standard.

In another optional implementation, the process for the voice device to calculate the positional relationship (i.e., a distance and a position angle between the user who issued the voice wake-up command and the voice device itself) may include: in terms of determining the distance, obtaining a distance value between the user and the voice device based on a position sensing module deployed in the voice device.

As shown in FIG. 4, the voice device can calculate and sense the distance between the user and the voice device according to a position sensing module (such as an infrared sensor, a millimeter-wave radar sensor, etc.) carried by the voice device itself.

In terms of determining the position angle, the process for the voice device to calculate the positional relationship may include: obtaining receiving times at which multiple audio receiving modules deployed in the voice device receive the voice wake-up command; calculating a time difference between an earliest receiving time and a latest receiving time in the voice device, and calculating a relative positional relationship between the user and the voice device according to a sound speed value and the time difference; and determining an included angle between the user and a central line of the voice device based on the relative positional relationship, and taking the included angle as the position angle.

In an implementation, in the embodiment of the present application, it is possible to calculate the position angle between the sound source and the voice device through the time difference of sound source data collected by multiple audio receiving modules (such as MIC devices) distributed at different positions of the voice device.

It can be understood that the audio receiving module that receives the user's voice first must be closer to the user, so the deployment position of this audio receiving module in the voice device is the direction of the user relative to the voice device, and thus the position angle between the user and the voice device can be determined.

For example, in the embodiment of the present application, after knowing the time difference (e.g., t) between the earliest receiving time and the latest receiving time, it is possible to calculate, according to the known sound speed value (i.e., the propagation speed of sound in air, e.g., v), the distance difference s (i.e., s = v*t) between the user and deployment positions of the first MIC (the MIC corresponding to the earliest receiving time) and the second MIC (the MIC corresponding to the latest receiving time).

Further, in the embodiment of the present application, the relative positional relationship between the user and the voice device can be deduced according to a preset distance association table, and the position angle between the user and the central line of the voice device can be determined based on the relative positional relationship.

Optionally, after sending the impact label to the central device, the method further includes: in response to receiving a wake-up notification sent by the central device, performing voice interaction with the user based on the voice wake-up command.

Optionally, before receiving the voice wake-up command, the method for device wake-up further includes: detecting an election event, where the election event refers to an intelligent device actively initiating an election command, or the election event occurring periodically, or detecting a change in the number of intelligent devices connected to the network. The intelligent device that initiates the election command may be referred to as a target intelligent device. When an election event is detected, the method for device wake-up further includes that the target intelligent device sends a first message reflecting a performance indicator of the target intelligent device to all other intelligent devices in the same network environment as the target intelligent device; in a case that an intelligent device receiving the first message (also referred to as a candidate intelligent device) detects that a performance indicator of the candidate intelligent device is higher than the performance indicator of the target intelligent device, the candidate intelligent device sends a second message (also referred to as a notification message) to the target intelligent device, where the notification message includes the performance indicator of the candidate intelligent device and is configured to inform the target intelligent device that there exists an intelligent device with a higher performance indicator than the target intelligent device in the network environment, that is, to inform that the performance indicator of the candidate intelligent device is higher than the performance indicator of the target intelligent device. In a case that the target intelligent device does not receive any second message sent by any candidate intelligent device within a preset time period, the target intelligent device is determined as the central device. In a case that the target intelligent device receives one or more second messages sent by candidate intelligent devices within the preset time period, the target intelligent device elects the candidate intelligent device with the highest performance indicator as the central device. The performance indicator may include, for example, graphics processing unit (GPU) usage rate, GPU computing capability, CPU usage rate, CPU computing capability and/or memory usage rate, and the like.

Specifically, a device may send a notification message about its own performance indicator (i.e., the first message) to other devices in the local area network. After receiving the first message, other devices compare their own performance indicators with the performance indicator of the device.

In an implementation, if a device detects that its own performance indicator is higher than that of the other party (the target intelligent device), the device sends a second message to the target intelligent device (the second message is configured to inform the target intelligent device that there exists an intelligent device with a higher performance indicator than the target intelligent device in the network environment).

In another implementation, if a device detects that its own performance indicator is lower than that of the target intelligent device, the device discards the received first message.

It can be understood that if a voice device sends a first message to other intelligent devices and does not receive a second message indicating a higher performance indicator than the voice device within a period of time, the voice device may create a communication group, elect the voice device itself as the central device of the communication group, and send a feedback message indicating that the voice device is the central device to other voice devices in the same network. Further, other voice devices in the same network join the communication group after receiving the feedback message from the central device, and become authenticated voice devices in the communication group.

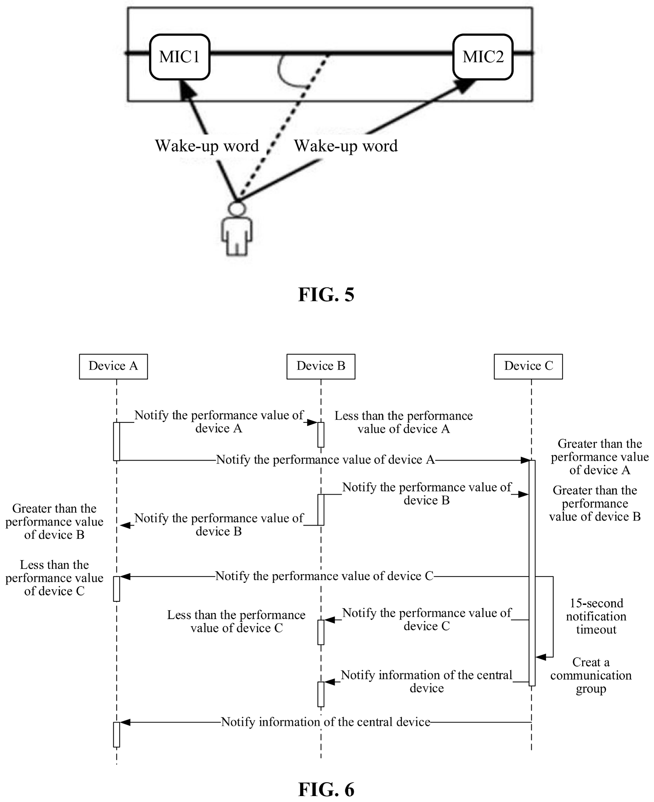

In an implementation, as shown in FIG. 6, the embodiment of the present application exemplarily describes the process of electing a central device and voice devices, which involves voice device A, voice device B, and voice device C, where the above-mentioned multiple devices are connected to the same communication network.

Devices A, B, and C are in the same local area network and will spontaneously form a communication group. When an election event is detected (e.g., an election event is generated periodically, or an election command is actively initiated by at least one of voice device A, voice device B, and voice device C), the devices can elect a central device according to their own device performances.

Specifically, device A sends a first message to device B and device C, device B sends a first message to device A and device C, and/or device C sends a first message to device B and device A.

Further, when device C detects that it has sent the first message to other devices (i.e., device A and device B) and still has not received a second message indicating a higher performance indicator than device C itself after 15 seconds, device C can create a communication group, elect device C itself as the central device of the communication group, and send a feedback message indicating that device C is the central device to device A and device B in the same network. Furthermore, device A and device B in the same network join the communication group after receiving the notification message from device C, and become authenticated voice devices in the communication group.

From this point on, in this network, device C is the central device, and device A and device B are voice devices.

It should be noted that device C may or may not be a voice device, but device A and device B need to be voice devices. In other words, the devices participating in the election are all intelligent devices in the same network. After the central device is determined, the recipients of the feedback message sent by the central device are only all voice devices in the same network (because a non-voice device cannot receive a voice wake-up command initiated by a user).

In an implementation, when an event of adding or removing devices occurs in the network, in the embodiment of the present application, the election event can be dynamically updated, that is, it is necessary to re-elect the central device.

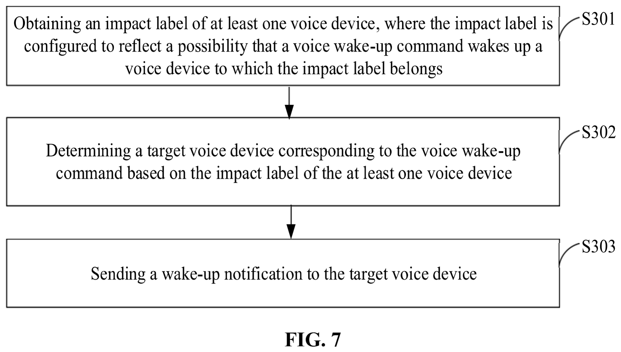

FIG. 7 schematically shows a flowchart of a method for device wake-up according to an embodiment of the present application. As shown in FIG. 7, the method is applied to a central device and includes steps S301 to S303.

S301: obtaining an impact label of at least one voice device, where the impact label is configured to reflect a possibility that a voice wake-up command wakes up a voice device to which the impact label belongs. In some embodiments, impact labels of multiple voice devices may be obtained.

S302: determining a target voice device corresponding to the voice wake-up command based on the impact label of the at least one voice device.

In an implementation, the central device needs to be selected in advance, that is, the central device needs to be selected based on a preset rule before the voice device receives the voice wake-up command.

For example, at least one central device may be elected periodically from all intelligent devices in the same network environment. Alternatively, at least one central device may be elected from all intelligent devices in the same network environment based on an initiation instruction generated by a certain intelligent device or a user.

In an implementation, in the process where the central device determines the target voice device to be woken up by the current voice wake-up command based on the impact labels of voice devices, for each of the voice devices, a wake-up index can be calculated for the voice device based on parameters included in the impact label of the voice device and the weight coefficients respectively corresponding to the parameters, so that the voice device with the largest wake-up index is subsequently determined as the wake-up target (i.e., the target voice device) corresponding to the current voice wake-up command.

For example, a weight coefficient includes the following parameters: audio quality, positional relationship, operational load level, and recognition time. Each parameter corresponds to a pre-determined weight coefficient, and the weight coefficients are 30%, 20%, 40%, and 10% respectively.

Further, the central device may rank the audio quality, positional relationship, operational load level, and recognition time of the voice devices, and calculate the wake-up index T of each voice device according to the following formula: T = (30% weight × audio quality ranking) + (20% × positional relationship ranking) + (40% × operational load level ranking) + (10% × recognition time ranking).

It can be understood that after calculating the wake-up index T of each voice device, the voice device with the highest value can be determined as the target voice device corresponding to the voice wake-up command.

S303: sending a wake-up notification to the target voice device.

In an implementation, after the central device determines the target voice device, the central device can send a wake-up notification to the target voice device to inform that the target voice device is the wake-up target this time, so that when receiving the wake-up notification, the target voice device can activate the voice interaction service to interact with the user for relevant data.

In an implementation, the central device may send the wake-up notification to the target voice device through a remote or short-range communication method.

For example, the remote communication method may be a local area network, a mobile network, a wireless network, or the like, and the short-range communication method may be NFC, Bluetooth, or the like.

Optionally, the central device has a voice interaction function, and obtaining the impact label of the at least one voice device includes: receiving the voice wake-up command, and calculating an impact label of the voice wake-up command on the central device; and receiving impact labels sent by other voice devices in a same network environment as the central device.

Optionally, determining the target voice device corresponding to the voice wake-up command based on the impact label of the at least one voice device includes: for each of the at least one voice device, calculating a wake-up index for the voice device based on parameters included in the impact label of the voice device and weight coefficients respectively corresponding to the parameters; and determining a voice device with a largest wake-up index as the target voice device corresponding to the voice wake-up command.

Optionally, in the process of determining the target voice device, the embodiment of the present application may further implement the following steps: determining whether the voice device with the largest wake-up index is currently in a service processing state based on an operational load level corresponding to the voice device with the largest wake-up index; in a case that the voice device with the largest wake-up index is currently in the service processing state, determining a candidate voice device closest to the voice device with the largest wake-up index as the target voice device, where a device type of the candidate voice device is the same as a device type of the voice device with the largest wake-up index; and in a case that the voice device with the largest wake-up index is not currently in the service processing state, determining the voice device with the largest wake-up index as the target voice device.

In an implementation, in a case that the voice device (i.e., the voice device with the largest wake-up index) is currently in a service processing state, the voice device cannot be used as the voice device corresponding to the current wake-up command. Therefore, the central device needs to determine another voice device as the wake-up target this time.

For example, the central device may determine a candidate voice device adjacent to the voice device in the service processing state as the wake-up target (and the device type of the candidate voice device needs to be the same as the device type of the voice device, otherwise the candidate voice device may not be able to process the service request of the user).

Optionally, before obtaining the impact label sent by the at least one voice device, the method further includes: in response to detecting an election event, sending a first message reflecting a performance indicator of the central device to all other intelligent devices in a same network as the central device; determining that no second message sent by any one of the other intelligent devices is received within a preset time period, where the second message sent by any one of the other intelligent devices is configured to inform that a performance indicator of the any one of the other intelligent devices in the network is higher; and sending a feedback message informing that the central device itself is a central device to all voice devices in the network.

Optionally, in another embodiment based on the above method of the present application, after sending the feedback message informing that the central device itself is the central device to all voice devices in the network, the method further includes: resending an election command to all intelligent devices in the network in a case that a change in a number of intelligent devices connected in the network is detected.

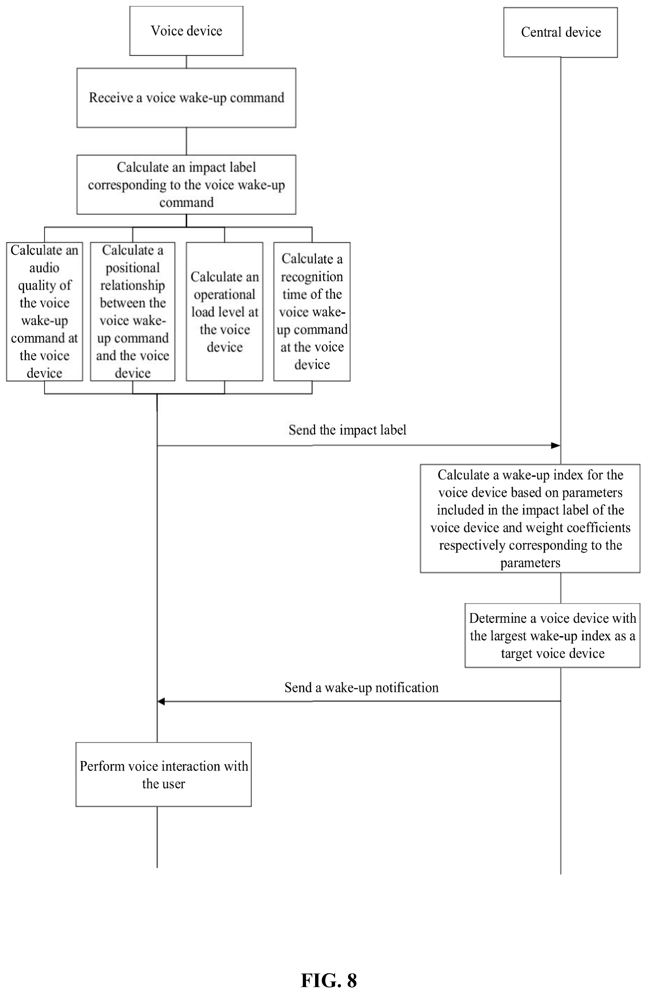

Further, the present application exemplarily describes the specific steps of the solution with reference to FIG. 8, including steps 1 to 8.

Step 1: a voice device receives a voice wake-up command.

There are multiple voice devices, and the voice devices and the central device are in the same communication network.

Step 2: the voice device calculates an audio quality, a positional relationship, an operational load level, and a recognition time of the voice wake-up command at the voice device.

The audio quality is configured to reflect an audio quality of the voice wake-up command received by the voice device; the positional relationship is configured to reflect a distance and a position angle between a user who issues the voice wake-up command and the voice device; the operational load level is configured to reflect an operational load level of the voice device; and the recognition time is configured to reflect a time at which the voice device receives the voice wake-up command.

Step 3: the voice device takes the audio quality, positional relationship, operational load level, and recognition time as an impact label of the voice device, and sends the impact label to the central device.

Step 4: the central device obtains the impact label of the voice device.

The impact label is configured to reflect the possibility that the voice wake-up command wakes up the voice device.

Step 5: for each voice device, the central device calculates a wake-up index for the voice device based on parameters included in an impact label of the voice device and weight coefficients respectively corresponding to the parameters.

It should be noted that when the central device is a voice device, the central device also needs to calculate the audio quality, positional relationship, operational load level, and recognition time of the voice wake-up command at the central device after receiving the voice wake-up command, and take them as the impact label of the central device. Subsequently, the impact label is compared with the impact labels of other voice devices to determine the voice device corresponding to the voice wake-up command.

Step 6: the central device determines a voice device with a largest wake-up index as a target voice device corresponding to the voice wake-up command.

Step 7: the central device sends a wake-up notification to the target voice device.

Step 8: the target voice device performs voice interaction with the user based on the voice wake-up command.

By applying the technical solution of the present application, when a voice wake-up command issued by a user is received in a scenario where multiple voice devices coexist, the pre-elected central device in the scenario can receive impact labels, each of which is calculated by a voice device based on the voice wake-up command received by itself, and compare the impact labels to find the target that is most likely to be the one to be woken up by the current voice wake-up command, so that the wake-up target can perform voice interaction with the user. This avoids the problem of poor voice interaction service experience caused by the inaccuracy of the voice device that responds to the wake-up voice command on the one hand. On the other hand, it is also possible to monitor the online operation status of each voice device in real time by checking whether the central device has received the impact labels from all voice devices.

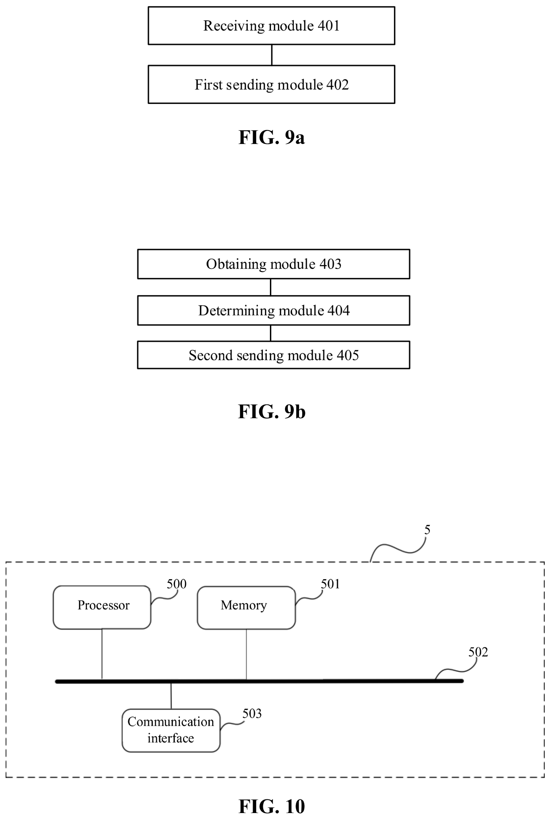

Optionally, in another embodiment of the present application, as shown in FIG. 9a, the present application further provides an apparatus for device wake-up, applied to a voice device, including: a receiving module 401 configured to receive a voice wake-up command and calculate an impact label of the voice wake-up command on the voice device, where the impact label is configured to reflect a possibility that the voice wake-up command wakes up the voice device; and a first sending module 402 configured to send the impact label to a central device, so that the central device determines a target voice device to be woken up by the voice wake-up command based on impact labels of multiple voice devices; where the central device is a pre-determined intelligent device in a same network environment as the multiple voice devices.

By applying the technical solution of the present application, when a voice wake-up command issued by a user is received in a scenario where multiple voice devices coexist, the pre-elected central device in the scenario can receive impact labels, each of which is calculated by a voice device based on the voice wake-up command received by itself, and compare the impact labels to find the target that is most likely to be the one to be woken up by the current voice wake-up command, so that the wake-up target can perform voice interaction with the user. This avoids the problem of poor voice interaction service experience caused by the inaccuracy of the voice device that responds to the wake-up voice command on the one hand. On the other hand, it is also possible to monitor the online operation status of each voice device in real time by checking whether the central device has received the impact labels from all voice devices.

In another implementation of the present application, the first sending module 402 is configured to: calculate at least one of an audio quality, a positional relationship, an operational load level or a recognition time of the voice wake-up command at the voice device; and take at least one of the audio quality, the positional relationship, the operational load level or the recognition time as the impact label of the voice wake-up command on the voice device; where the audio quality is configured to reflect an audio quality of the voice wake-up command received by the voice device; the positional relationship is configured to reflect a distance and a position angle between a user who issues the voice wake-up command and the voice device; the operational load level is configured to reflect an operational load level of the voice device when the voice wake-up command is received; and the recognition time is configured to reflect a time at which the voice device receives the voice wake-up command.

In another implementation of the present application, the first sending module 402 is configured to: calculate a volume value of the voice wake-up command based on an audio frequency and an audio amplitude corresponding to the voice wake-up command; adjust the volume value by a preset amplitude based on a device type of the voice device to obtain an updated volume value after adjustment; and determine the audio quality of the voice wake-up command at the voice device based on the updated volume value.

In another implementation of the present application, the first sending module 402 is configured to: obtain a distance value between the user and the voice device based on a position sensing module deployed in the voice device; and
obtain receiving times at which multiple audio receiving modules deployed in the voice device receive the voice wake-up command; calculate a time difference between an earliest receiving time and a latest receiving time in the voice device, and calculate a relative positional relationship between the user and the voice device according to a sound speed value and the time difference; and determine an included angle between the user and a central line of the voice device based on the relative positional relationship, and take the included angle as a position angle.

In another implementation of the present application, the first sending module 402 is configured to: in response to receiving a wake-up notification sent by the central device, perform voice interaction with the user based on the voice wake-up command.

In another implementation of the present application, the first sending module 402 is configured to: in response to detecting an election event, send a first message reflecting a performance indicator of the voice device to all intelligent devices in a same network environment as the voice device, so that in a case that a candidate intelligent device receiving the first message detects that a performance indicator of the candidate intelligent device is higher than the performance indicator of the voice device, the candidate intelligent device sends a second message to the voice device, where the second message includes the performance indicator of the candidate intelligent device and is configured to inform the voice device that there exists an intelligent device in the network environment with a higher performance indicator than the voice device; determine the voice device as the central device in a case that no second message sent by any candidate intelligent device is received within a preset time period; and elect a candidate intelligent device with a highest performance indicator as the central device in a case that one or more second messages sent by candidate intelligent devices are received within the preset time period.

Optionally, in another embodiment of the present application, as shown in FIG. 9b, the present application further provides an apparatus for device wake-up, applied to a central device, including: an obtaining module 403, configured to obtain an impact label of at least one voice device, where the impact label is configured to reflect a possibility that a voice wake-up command wakes up a voice device to which the impact label belongs; a determining module 404, configured to determine a target voice device corresponding to the voice wake-up command based on the impact label of the at least one voice device; and a second sending module 405, configured to send a wake-up notification to the target voice device.

In another embodiment of the present application, the second sending module 405 is configured to: receive the voice wake-up command, and calculate an impact label of the voice wake-up command on the central device; and receive impact labels sent by other voice devices in a same network environment as the central device.

In another embodiment of the present application, the second sending module 405 is configured to: for each of the at least one voice device, calculate a wake-up index for the voice device based on parameters included in an impact label of the voice device and weight coefficients respectively corresponding to the parameters; and determine a voice device with a largest wake-up index as the target voice device corresponding to the voice wake-up command.

In another embodiment of the present application, the second sending module 405 is configured to: determine whether the voice device with the largest wake-up index is currently in a service processing state based on an operational load level corresponding to the voice device with the largest wake-up index; in a case that the voice device with the largest wake-up index is currently in the service processing state, determine a candidate voice device closest to the voice device with the largest wake-up index as the target voice device, where a device type of the candidate voice device is the same as a device type of the voice device with the largest wake-up index; and in a case that the voice device with the largest wake-up index is not currently in the service processing state, determine the voice device with the largest wake-up index as the target voice device.

In another embodiment of the present application, the second sending module 405 is configured to: in response to detecting an election event, send a first message reflecting a performance indicator of the central device to all other intelligent devices in a same network as the central device; determine that no second message sent by any one of the other intelligent devices is received within a preset time period, where the second message sent by any one of the other intelligent devices is configured to inform that a performance indicator of the any one of the other intelligent devices in the network is higher; and send a feedback message informing that the central device itself is a central device to all voice devices in the network.

In another embodiment of the present application, the second sending module 405 is configured to: resend an election command to all intelligent devices in the network in a case that a change in a number of intelligent devices connected in the network is detected.

The embodiments of the present application further provide a voice device to perform the above method for device wake-up. Reference can be made to FIG. 10, which shows a schematic diagram of a voice device according to some embodiments of the present application. As shown in FIG. 10, the voice device 5 includes: a processor 500, a memory 501, a bus 502, and a communication interface 503. The processor 500, the communication interface 503, and the memory 501 are connected through the bus 502; the memory 501 stores a computer program that can run on the processor 500, and the processor 500 executes the computer program to implement the method for device wake-up provided in any of the foregoing embodiments of the present application.

The memory 501 may include a high-speed random access memory (RAM: Random Access Memory), and may also include a non-volatile memory, such as at least one disk memory. The communication connection between the device network element and at least one other network element is implemented through at least one communication interface 503 (which may be wired or wireless), and the Internet, a wide area network, a local network, a metropolitan area network, etc. may be used.

The bus 502 may be an ISA bus, a PCI bus, an EISA bus, or the like. The bus can be divided into an address bus, a data bus, a control bus, and the like. The memory 501 is configured to store a program, and the processor 500 executes the program after receiving an execution instruction. The method for device wake-up disclosed in any of the foregoing embodiments of the present application may be applied to the processor 500, or implemented by the processor 500.

The processor 500 may be an integrated circuit chip with signal processing capabilities. In the implementation process, each step of the above method may be completed by an integrated logic circuit of hardware or an instruction in the form of software in the processor 500. The above processor 500 may be a general-purpose processor, including a Central Processing Unit (CPU), a Network Processor (NP), etc.; The processor 500 may also be a digital signal processor (DSP), an application-specific integrated circuit (ASIC), a field-programmable gate array (FPGA) or other programmable logic devices, discrete gate or transistor logic devices, discrete hardware components. The methods, steps, and logic block diagrams disclosed in the embodiments of the present application can be implemented or executed. A general-purpose processor may be a microprocessor or the processor may be any conventional processor, etc. The steps of the method disclosed in conjunction with the embodiments of the present application may be directly implemented by a hardware decoding processor, or implemented by a combination of hardware and software modules in the decoding processor. The software modules may be located in a mature storage medium in the art, such as random access memory, flash memory, read-only memory, programmable read-only memory or electrically erasable programmable memory, registers, etc. The storage medium is located in the memory 501, and the processor 500 reads the information in the memory 501 and completes the steps of the above method in combination with the hardware of the processor 500.

The voice device provided in the embodiment of the present application and the method for device wake-up provided in the embodiment of the present application are derived from the same inventive concept, and have the same beneficial effects as the method adopted, operated, or implemented.

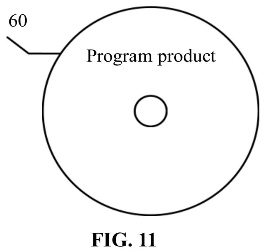

The embodiments of the present application further provide a computer-readable storage medium corresponding to the method for device wake-up provided in the foregoing embodiments. Reference can be made to FIG. 11, which shows a computer-readable storage medium as an optical disc 60, on which a computer program (i.e., a program product) is stored. When the computer program is run by a processor, the method for device wake-up provided in any of the foregoing embodiments will be performed.

It should be noted that examples of the computer-readable storage medium may further include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory, or other optical or magnetic storage media, which will not be listed here.

The computer-readable storage medium provided in the above embodiment of the present application and the method for device wake-up provided in the embodiment of the present application are derived from the same inventive concept, and have the same beneficial effects as the method adopted, operated, or implemented by the application program stored therein.

It should be noted that numerous specific details are set forth in the specification provided herein. However, it should be understood that the embodiments of the present application can be implemented without these specific details. In some cases, well-known structures and technologies are not described in detail to avoid obscuring the understanding of this specification.

Similarly, it should be understood that to simplify the present application and help understand one or more aspects of the present application, in the above description of the exemplary embodiments of the present application, various features of the present application are sometimes grouped into a single embodiment, figure, or description thereof. However, the disclosed method should not be interpreted as reflecting the following intention, that is, the claimed present application requires more features than those explicitly stated in each claim.

More precisely, as reflected in the following claims, the inventive aspect lies in fewer features than all features of a single embodiment disclosed above. Therefore, the claims following the detailed description are thus explicitly incorporated into the detailed description, where each claim itself serves as a separate embodiment of the present application.

In addition, those skilled in the art can understand that although some embodiments described herein include some features included in other embodiments but not others, combinations of features of different embodiments are intended to fall within the scope of the present application and form different embodiments.

For example, in the following claims, any one of the claimed embodiments can be used in any combination.

The above description is only some embodiments of the present application, but the protection scope of the present application is not limited thereto. Any change or replacement that can be easily conceived by those skilled in the art within the technical scope disclosed in the present application shall fall within the protection scope of the present application. Therefore, the protection scope of the present application shall be subject to the protection scope of the claims.

## Claims

1. A method for device wake-up, applied to a voice device, comprising:
receiving a voice wake-up command, and calculating an impact label of the voice wake-up command on the voice device, wherein the impact label is configured to reflect a possibility that the voice wake-up command wakes up the voice device; and
sending the impact label to a central device, so that the central device determines, based on impact labels of multiple voice devices, a target voice device to be woken up by the voice wake-up command;
wherein the central device is an intelligent device in a same network environment as the multiple voice devices.

2. The method according to claim 1, wherein calculating the impact label of the voice wake-up command on the voice device comprises:
calculating at least one of an audio quality, a positional relationship, an operational load level or a recognition time of the voice wake-up command at the voice device; and
taking at least one of the audio quality, the positional relationship, the operational load level or the recognition time as the impact label of the voice wake-up command on the voice device;
wherein the audio quality is configured to reflect an audio quality of the voice wake-up command received by the voice device;
the positional relationship is configured to reflect a distance and a position angle between a user who issues the voice wake-up command and the voice device;
the operational load level is configured to reflect an operational load level of the voice device when the voice wake-up command is received; and
the recognition time is configured to reflect a time at which the voice device receives the voice wake-up command.

3. The method according to claim 2, wherein calculating the audio quality of the voice wake-up command at the voice device comprises:
calculating a volume value of the voice wake-up command based on an audio frequency and an audio amplitude corresponding to the voice wake-up command;
adjusting the volume value by a preset amplitude based on a device type of the voice device to obtain an updated volume value after adjustment; and
determining the audio quality of the voice wake-up command at the voice device based on the updated volume value.

4. The method according to claim 2, wherein calculating the positional relationship of the voice wake-up command at the voice device comprises:
obtaining a distance value between the user and the voice device based on a position sensing module deployed in the voice device;
obtaining receiving times at which multiple audio receiving modules deployed in the voice device receive the voice wake-up command;
calculating a time difference between an earliest receiving time and a latest receiving time in the voice device, and calculating a relative positional relationship between the user and the voice device according to a sound speed value and the time difference; and
determining an included angle between the user and a central line of the voice device based on the relative positional relationship, and taking the included angle as a position angle.

5. The method according to claim 1, wherein after sending the impact label to the central device, the method further comprises:
in response to receiving a wake-up notification sent by the central device, performing voice interaction with the user based on the voice wake-up command.

6. The method according to claim 1, wherein before receiving the voice wake-up command, the method further comprises:
in response to detecting an election event, sending a first message reflecting a performance indicator of the voice device to all intelligent devices in a same network environment as the voice device, so that in a case that a candidate intelligent device receiving the first message detects that a performance indicator of the candidate intelligent device are higher than the performance indicator of the voice device, the candidate intelligent device sends a second message to the voice device, wherein the second message comprises the performance indicator of the candidate intelligent device and is configured to inform the voice device that there exists an intelligent device in the network environment with a higher performance indicator than the voice device;
determining the voice device as the central device in a case that no second message sent by any candidate intelligent device is received within a preset time period; and
electing a candidate intelligent device with a highest performance indicator as the central device in a case that one or more second messages sent by candidate intelligent devices are received within the preset time period.

7. A method for device wake-up, applied to a central device, comprising:
obtaining an impact label of at least one voice device, wherein the impact label is configured to reflect a possibility that a voice wake-up command wakes up a voice device to which the impact label belongs;
determining a target voice device corresponding to the voice wake-up command based on the impact label of the at least one voice device; and
sending a wake-up notification to the target voice device.

8. The method according to claim 7, wherein the central device has a voice interaction function, and obtaining the impact label of the at least one voice device comprises:
receiving the voice wake-up command, and calculating an impact label of the voice wake-up command on the central device; and
receiving impact labels sent by other voice devices in a same network environment as the central device.

9. The method according to claim 7, wherein determining the target voice device corresponding to the voice wake-up command based on the impact label of the at least one voice device comprises:
for each of the at least one voice device, calculating a wake-up index for the voice device based on parameters comprised in an impact label of the voice device and weight coefficients respectively corresponding to the parameters; and
determining a voice device with a largest wake-up index as the target voice device corresponding to the voice wake-up command.

10. The method according to claim 9, wherein determining the voice device with the largest wake-up index as the target voice device corresponding to the voice wake-up command comprises:
determining whether the voice device with the largest wake-up index is currently in a service processing state based on an operational load level corresponding to the voice device with the largest wake-up index;
in a case that the voice device with the largest wake-up index is currently in the service processing state, determining a candidate voice device closest to the voice device with the largest wake-up index as the target voice device, wherein a device type of the candidate voice device is the same as a device type of the voice device with the largest wake-up index; and
in a case that the voice device with the largest wake-up index is not currently in the service processing state, determining the voice device with the largest wake-up index as the target voice device.

11. The method according to claim 7, wherein before obtaining the impact label sent by the at least one voice device, the method further comprises:
in response to detecting an election event, sending a first message reflecting a performance indicator of the central device to all other intelligent devices in a same network as the central device;
determining that no second message sent by any one of the other intelligent devices is received within a preset time period, wherein the second message sent by any one of the other intelligent devices is configured to inform that a performance indicator of the any one of the other intelligent devices in the network is higher; and
sending a feedback message informing that the central device itself is a central device to all voice devices in the network.

12. The method according to claim 11, wherein after sending the feedback message informing that the central device itself is the central device to all voice devices in the network, the method further comprises:
resending an election command to all intelligent devices in the network in a case that a change in a number of intelligent devices connected in the network is detected.

13. An apparatus for device wake-up, applied to a voice device, comprising:
a receiving module, configured to receive a voice wake-up command and calculate an impact label of the voice wake-up command on the voice device, wherein the impact label is configured to reflect a possibility that the voice wake-up command wakes up the voice device; and
a first sending module, configured to send the impact label to a central device, so that the central device determines, based on impact labels of multiple voice devices, a target voice device to be woken up by the voice wake-up command;
wherein the central device is a pre-determined intelligent device in a same network environment as the multiple voice devices.

14. An apparatus for device wake-up, applied to a central device, comprising:
an obtaining module, configured to obtain an impact label of at least one voice device, wherein the impact label is configured to reflect a possibility that a voice wake-up command wakes up a voice device to which the impact label belongs;
a determining module, configured to determine a target voice device corresponding to the voice wake-up command based on the impact label of the at least one voice device; and
a second sending module, configured to send a wake-up notification to the target voice device.

15. A voice device, comprising:
a memory, configured to store executable instructions; and
one or more processors, configured to execute the executable instructions to perform operations of the method for device wake-up according to any one of claims 1 to 12.

16. A computer-readable storage medium for storing computer-readable instructions, wherein when the instructions are executed by one or more processors, operations of the method for device wake-up according to any one of claims 1 to 12 are performed.
